(19) Europäisches Patentamt
European Patent Office
Office européen des brevets

(11) EP 4 567 713 A1

(12) EUROPEAN PATENT APPLICATION
published in accordance with Art. 153(4) EPC

(43) Date of publication:
11.06.2025 Bulletin 2025/24

(51) International Patent Classification (IPC):
$G06T\ 5/00^{(2024.01)}$     $H04N\ 9/64^{(2023.01)}$

(21) Application number: 22953878.0

(52) Cooperative Patent Classification (CPC):
G06T 5/00; G06T 5/77; G06T 7/90; H04N 9/64

(22) Date of filing: 28.12.2022

(86) International application number:
PCT/CN2022/142609

(87) International publication number:
WO 2024/027090 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.08.2022 CN 202210932339

(71) Applicant: Zhejiang Uniview Technologies Co., Ltd.
Hangzhou, Zhejiang 310051 (CN)

(72) Inventors:
• LIN, Kai
  Hangzhou, Zhejiang 310051 (CN)
• WU, Po
  Hangzhou, Zhejiang 310051 (CN)
• SUN, Yue
  Hangzhou, Zhejiang 310051 (CN)

(74) Representative: Plougmann Vingtoft a/s
Strandvejen 70
2900 Hellerup (DK)

(54) **COLOR CORRECTION MATRIX OPTIMIZATION METHOD AND APPARATUS, AND ELECTRONIC DEVICE AND MEDIUM**

(57) Provided are a color correction matrix optimization method and apparatus, an electronic device, and a medium. The method includes performing correction processing on a color source matrix of an acquired color chart image based on a color correction matrix to obtain an output color matrix; determining a global hue error and a saturation constraint regularization term based on Lab coordinates of the output color matrix and Lab coordinates of a target color matrix of a target color chart image and constructing a loss function; and updating the color correction matrix based on a value of the loss function until the value of the loss function converges to obtain an optimal color correction matrix to perform color correction on a to-be-processed image based on the optimal color correction matrix.

Perform correction processing on a color source matrix of an acquired color chart image based on a color correction matrix to obtain an output color matrix — S110

Determine a global hue error and a saturation constraint regularization term based on Lab coordinates of the output color matrix and Lab coordinates of a target color matrix of a target color chart image and construct a loss function based on the global hue error and the saturation constraint regularization term, where the Lab coordinates are coordinates in a Lab color space — S120

Update the color correction matrix based on a value of the loss function until the value of the loss function converges to obtain an optimal color correction matrix so that color correction of a to-be-processed image acquired by an image acquisition device can be performed by using the optimal color correction matrix — S130

**FIG. 1**

**Description**

This application claims priority to Chinese Patent Application No. 202210932339.X filed with the China National Intellectual Property Administration (CNIPA) on Aug. 4, 2022, the disclosure of which is incorporated herein by reference in its entirety.

TECHNICAL FIELD

Embodiments of this application relate to the field of image processing, for example, a color correction matrix optimization method and apparatus, an electronic device, and a medium.

BACKGROUND

An image captured by a digital camera often exhibits a certain color deviation from the actual image perceived by human eyes. Factors that contribute to the color deviation in the image include the color temperature of the light source, the light transmission characteristics of the lens, and the photosensitive characteristics of the image sensor. In digital color correction matrix optimization, the automatic white balance (AWB) algorithm is used to correct color cast caused by the color temperature to simulate human eyes' constancy in perceiving gray. Even after AWB correction, severe color cast remains in a color image. The main cause of this color cast is the significant difference in the response for spectrums and luminance between the image sensor and the human eyes. Therefore, after AWB restores the color of a gray object, a color correction matrix (CCM) is required to correct an image captured by a camera to address the color cast of a colored object.

However, current color correction schemes optimize a color correction matrix solely based on the Euclidean distance between the coordinates of a to-be-corrected image and a corrected image. But the Euclidean distance does not fully represent the difference between the color perceived by human eyes and the color captured by a camera. As a result, the color in the corrected image may not closely match the color perceived by the human eyes. Additionally, in the current color correction matrix optimization schemes, an initialized color correction matrix is obtained using the least squares method, easily causing the optimization result to fall into a local minimum trap and failing to obtain the global optimum solution in the subsequent optimization process.

SUMMARY

This application provides a color correction matrix optimization method and apparatus, an electronic device, and a medium to determine a loss function based on an actual human eye perception of hue and saturation, optimize a color correction matrix, and improve fitting between a corrected image color and a human-eye-perceived color.

An embodiment of this application provides a color correction matrix optimization method.

The method includes performing correction processing on a color source matrix of an acquired color chart image based on a color correction matrix to obtain an output color matrix; determining a global hue error and a saturation constraint regularization term based on Lab coordinates of the output color matrix and Lab coordinates of a target color matrix of a target color chart image and constructing a loss function based on the global hue error and the saturation constraint regularization term, where the Lab coordinates are coordinates in a Lab color space; and updating the color correction matrix based on a value of the loss function until the value of the loss function converges to obtain an optimal color correction matrix so that color correction of a to-be-processed image acquired by an image acquisition device can be performed by using the optimal color correction matrix.

An embodiment of this application provides a color correction matrix optimization apparatus.

The apparatus includes a correction processing module, a loss function construction module, and an optimization module.

The correction processing module is configured to perform correction processing on a color source matrix of an acquired color chart image based on a color correction matrix to obtain an output color matrix.

The loss function construction module is configured to determine a global hue error and a saturation constraint regularization term based on Lab coordinates of the output color matrix and Lab coordinates of a target color matrix of a target color chart image and construct a loss function based on the global hue error and the saturation constraint regularization term, where the Lab coordinates are coordinates in a Lab color space.

The optimization module is configured to update the color correction matrix based on a value of the loss function until the value of the loss function converges to obtain an optimal color correction matrix so that color correction of a to-be-processed image acquired by an image acquisition device can be performed by using the optimal color correction matrix.

An embodiment of this application provides an electronic device.

The electronic device includes one or more processors and a memory configured to store one or more programs.

When executed by the one or more processors, the one or more programs enable the one or more processors to perform the color correction matrix optimization method of any previous embodiment.

An embodiment of this application provides a computer-readable storage medium. The storage medium stores a computer program which, when executed by a processor, causes the processor to perform the color correction matrix optimization method of any previous embodiment.

BRIEF DESCRIPTION OF DRAWINGS

The same or similar reference numerals throughout the drawings denote the same or similar elements. It is to be understood that the drawings are schematic and that originals and elements are not necessarily drawn to scale.

FIG. 1 is a flowchart of a color correction matrix optimization method according to an embodiment of this application.

FIG. 2 is a diagram of color patch pixels according to an embodiment of this application.

FIG. 3 is another flowchart of a color correction matrix optimization method according to an embodiment of this application.

FIG. 4 is another flowchart of a color correction matrix optimization method according to an embodiment of this application.

FIG. 5 is a flowchart of iterative optimization according to an embodiment of this application.

FIG. 6 is a diagram illustrating the structure of a color correction matrix optimization apparatus according to an embodiment of this application.

FIG. 7 is a diagram illustrating the structure of an electronic device according to an embodiment of this application.

DETAILED DESCRIPTION

Before example embodiments are discussed in more detail, it is to be noted that some example embodiments are described as processing or methods depicted in flowcharts. Although multiple steps are described as sequential processing in the flowcharts, many of the steps may be implemented concurrently, coincidentally, or simultaneously. Additionally, the sequence of the multiple steps may be rearranged. The processing may be terminated when operations thereof are completed, but the processing may further have additional steps that are not included in the drawings. The processing may correspond to, for example, a method, a function, a procedure, a subroutine, or a subprogram.

To facilitate a better understanding of embodiments of this application, the following describes involved technologies.

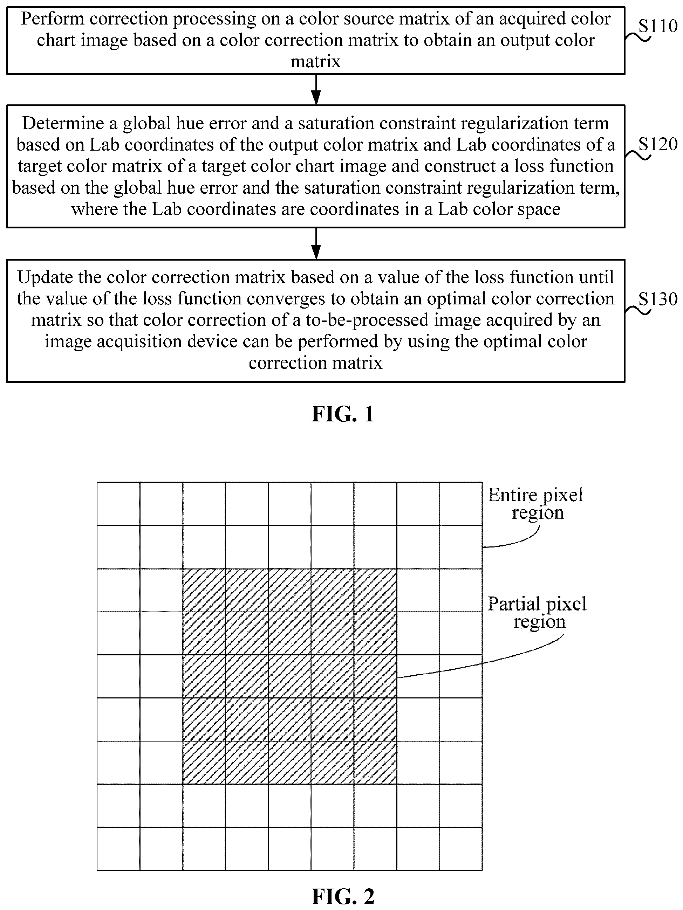

FIG. 1 is a flowchart of a color correction matrix optimization method according to an embodiment of this application. This embodiment of this application is applicable to color correction matrix optimization. For example, the color correction matrix optimization method may be performed by a color correction matrix optimization apparatus. The color correction matrix optimization apparatus may be implemented by software and/or hardware and integrated in an electronic device.

As shown in FIG. 1, the method includes the following steps:

In S110, a color source matrix of an acquired color chart image is corrected based on a color correction matrix to obtain an output color matrix.

The acquired color chart image is an image acquired from image acquisition of a 24-color standard color chart by an image acquisition device. Before the color correction is performed, preprocessing such as black level correction, Bayer interpolation, and white balance correction may also be performed on the acquired color chart image. The color source matrix of the acquired color chart image is constructed based on the intensity values of red (R), green (G) and blue (B) channels of each color patch in the acquired color chart image. For example, in the pixel region of each color patch, pixels in the partial pixel region closest to the central pixel are selected. The intensity values of the R channels of the selected pixels are averaged, the intensity values of the G channels of the selected pixels are averaged, and the intensity values of the B channels of the selected pixels are averaged to serve as the intensity values of the R, G and B channels of the color patch and serve as one column of the matrix. For 24 color patches, 24 columns of intensity values of R, G and B channels are obtained to form the color source matrix. Operations are performed on the color correction matrix and the matrix corresponding to the color source matrix to achieve color correction of the color source matrix.

Illustratively, as shown in FIG. 2, it is assumed that FIG. 2 is one of the color patches in the acquired color chart image and the partial pixel region closest to the central pixel, that is, the region of the 25 pixels represented by the shadow of FIG. 2, is selected. The average R-channel intensity value, the average G-channel intensity value, and the average B-channel intensity value of the 25 pixels are calculated to obtain $r_i^s$, $g_i^s$, and $b_i^s$ corresponding to the color patch. Such processing is performed on all 24 color patches to obtain the color source matrix of the acquired color chart image:

$$C_s = \begin{bmatrix} r_1^s & r_2^s & \cdots & r_{24}^s \\ g_1^s & g_2^s & \cdots & g_{24}^s \\ b_1^s & b_2^s & \cdots & b_{24}^s \end{bmatrix}$$

. The first column represents the intensity values of the R, G, and B channels of the first color patch. The second column represents the intensity values of the R, G, and B channels of the second color patch. The last column represents the intensity values of the R, G, and B channels of the 24th color patch. In this embodiment of this application, the number of pixels in the entire pixel region and the number of pixels in the partial pixel region of the color patch are examples in FIG. 2 and are determined by the acquired color chart image. This is not limited here.

$$CCM = \begin{bmatrix} c_{11} & c_{12} & c_{13} \\ c_{21} & c_{22} & c_{23} \\ c_{31} & c_{32} & c_{33} \end{bmatrix}$$

The color correction matrix may be . Parameters in the CCM may be adjusted in a subsequent optimization process. After the color source matrix is linearly transformed by the CCM, the color source matrix is corrected. The expression is $C_o = CCM \cdot C_s$. $C_o$ is the output color matrix.

In S120, a global hue error and a saturation constraint regularization term are determined based on Lab coordinates of the output color matrix and Lab coordinates of a target color matrix of a target color chart image, and a loss function is constructed based on the global hue error and the saturation constraint regularization term, where the Lab coordinates are coordinates in a Lab color space.

The target color chart image is a predetermined color chart image reflecting colors perceived by human eyes. The target color matrix is a matrix obtained from sampling and averaging of the three-channel intensity values of pixels of each color patch in the target color chart image. A process of determining the target color matrix of the target color chart image is consistent with a process of determining the color source matrix of the acquired color chart image, for details, the reference

$$\begin{bmatrix} r_1^t & r_2^t & \cdots & r_{24}^t \\ g_1^t & g_2^t & \cdots & g_{24}^t \\ b_1^t & b_2^t & \cdots & b_{24}^t \end{bmatrix}$$

is made to S110. The obtained target color matrix is $C_t =$ . In an actual color correction process, after color correction is performed on the image acquired by the image acquisition device by using the color correction matrix, a nonlinear operation using gamma correction is required. Thus a final corrected image is obtained. Therefore, in this embodiment of this application, to compare the target color matrix with the output color matrix on which the color correction is performed by the color correction matrix, inverse gamma transformation is performed on the target color matrix so that results of the output color matrix and the target color matrix in the same processing dimension are compared and analyzed.

Lab color space is a color space in which luminance and chromaticity are relatively separated and is a uniform color space recommended by the International Society for Illumination. The space is a three-dimensional rectangular coordinate system and is currently the most widely used color measurement system. *L* is a luminance component and represents luminance. The two components (*a, b*) form a chrominance plane. a and b represent opposite color dimensions. Color difference evaluation is performed on the output color matrix and the target color matrix. The output color matrix and the target color matrix are required to be transformed from data in another color space to data in the Lab color space before comparison. In the Lab color space, based on the hue information and saturation information of the output color matrix represented by the coordinates of the output color matrix and based on the hue information and saturation information of the target color matrix represented by the coordinates of the target color matrix, the global hue errors and saturation constraint regularization terms of the output color matrix and the target color matrix are determined. The global hue error represents the difference in chromaticity. If the loss function is determined solely based on the global hue error, the saturation in the chromaticity space may undergo arbitrary scaling, making it impossible to achieve the desired color correction effect. In this embodiment of this application, the saturation constraint regularization term is constructed to limit arbitrary scaling of saturation in a loss function optimization process, thereby improving a color correction effect. The saturation constraint regularization term may be determined based on the saturation difference in a manner determined based on actual conditions. For example, the respective saturations may be represented by the Lab coordinates of the output color matrix and the Lab coordinates of the target color matrix, the saturation difference is determined, and the saturation constraint regularization term is constructed based on the saturation difference.

For example, a loss function may be constructed by operations on the global hue error and the saturation constraint regularization term. The values of elements in the output color matrix and the target color matrix are substituted into the loss function to obtain values of the loss function. In an operation process, it is feasible to introduce a coefficient depending on the actual situation to adjust weights of the global hue error and the saturation constraint regularization term in the loss function.

The solution of this embodiment of this application takes into account the global hue error and saturation difference that are more perceptible to human eyes. Based on the global hue error and the saturation constraint regularization term, and the loss function is determined to update the color correction matrix. This ensures that after color correction is performed on the acquired image based on the optimized color correction matrix, the corrected colors are closer to colors perceived by human eyes.

In S130, the color correction matrix is updated based on a value of the loss function until the value of the loss function converges to obtain an optimal color correction matrix so that color correction of a to-be-processed image acquired by an image acquisition device can be performed by using the optimal color correction matrix.

For example, iterative optimization is performed on the color correction matrix until the value of the loss function converges to obtain the minimum value of the loss function. The color correction matrix corresponding to the minimum value of the loss function is used as the optimal color correction matrix. In subsequent applications, relevant parameters of the optimal color correction matrix may be inputted into the image acquisition device so that the image acquisition device can generate the optimal color correction matrix based on the relevant parameters, perform color correction on the acquired to-be-processed image, and perform gamma transformation on the color-corrected to-be-processed image to obtain a final output image. Since the output image is subjected to the color correction and gamma transformation, the color of the output image can be close to the color perceived by human eyes, thereby improving the viewing experience of the user.

It is to be noted that the electronic device for performing the preceding solution of this embodiment of this application may be consistent with or different from a device that subsequently performs color correction on the to-be-processed image by using the optimal color correction matrix. Generally, since the solution of this embodiment of this application involves processing of a large amount of data, such data may be executed by an electronic device with high processing performance. After the optimal color correction matrix is obtained, the relevant parameters of the optimal color correction matrix are inputted into the image acquisition device so that the image acquisition device can generate the optimal color correction matrix by using the relevant parameters and so that the acquired image can be processed.

Embodiments of this application provide a color correction matrix optimization method and apparatus, an electronic device, and a medium. An implementation solution includes performing correction processing on the color source matrix of the acquired color chart image based on the color correction matrix to obtain the output color matrix; determining the loss function based on the global hue error and the saturation constraint regularization term of the output color matrix and the target color matrix of the target color chart image in the Lab color space; and updating the color correction matrix based on the value of the loss function until the value of the loss function converges to obtain the optimal color correction matrix so that color correction of the to-be-processed image acquired by the image acquisition device can be performed by using the optimal color correction matrix. When optimizing the color correction matrix, this solution determines the loss function by taking into account the global hue error and saturation difference that are more perceptible to human eyes. This ensures that after color correction is performed on the image acquired by the image acquisition device based on the optimized color correction matrix, the corrected colors are closer to colors perceived by human eyes.

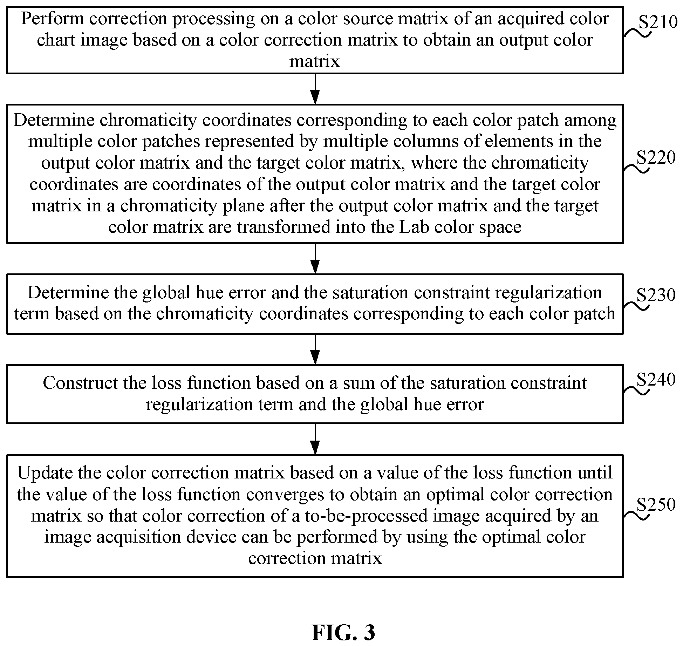

FIG. 3 is another flowchart of a color correction matrix optimization method according to an embodiment of this application. This embodiment is an optimization on the previous embodiments. For technical details not described in detail in this embodiment, see any previous embodiment.

For example, as shown in FIG. 3, the method includes the following steps:

In S210, correction processing is performed on a color source matrix of an acquired color chart image based on a color correction matrix to obtain an output color matrix.

In S220, chromaticity coordinates corresponding to each color patch among multiple color patches represented by multiple columns of elements in the output color matrix and multiple columns of the target color matrix are determined, where the chromaticity coordinates are coordinates of the output color matrix and the target color matrix in a chromaticity plane after the output color matrix and the target color matrix are transformed into the Lab color space.

Illustratively, each column of elements in the output color matrix and the target color matrix represents one color patch. The output color matrix and the target color matrix are transformed to the Lab color space to obtain multiple elements of the output color matrix and multiple elements of the target color matrix in the Lab color space, and then the chromaticity coordinates of each color patch in the Lab color space are determined. Illustratively, in the RGB color space, an i$^{th}$ color patch in the output color matrix is represented by an i$^{th}$ column of elements $r_i^o$, $g_i^o$ and $b_i^o$. After transformed into the Lab color space, the i$^{th}$ color patch in the output color matrix is represented by $L_i^o$, $a_i^o$ and $b_i^o$. ( $L_i^o$, $a_i^o$, $b_i^o$ ) are the coordinates of the i$^{th}$ color patch in the Lab color space. A matrix formed by the coordinates of 24

$$C_o^{Lab} = \begin{bmatrix} L_1^o & L_2^o & \cdots & L_{24}^o \\ a_1^o & a_2^o & \cdots & a_{24}^o \\ b_1^o & b_2^o & \cdots & b_{24}^o \end{bmatrix}$$

color patches in the Lab color space is . Similarly, the matrix of the target color matrix

$$C_t^{Lab} = \begin{bmatrix} L_1^t & L_2^t & \cdots & L_{24}^t \\ a_1^t & a_2^t & \cdots & a_{24}^t \\ b_1^t & b_2^t & \cdots & b_{24}^t \end{bmatrix}$$

in the Lab color space is .

In this embodiment of this application, the chromaticity coordinates are coordinates on the chromaticity plane in the Lab color space, that is, coordinate a and coordinate b for color representation. Since the evaluation criterion of the color error directly affects the visual effect of color correction, the global hue error and the saturation constraint regularization term of the image are analyzed based on the chromaticity coordinates.

In S230, the global hue error and the saturation constraint regularization term are determined based on the chromaticity coordinates corresponding to each color patch.

The Lab color space is a color space in which luminance and chrominance are relatively separated, two components ($a$, $b$) jointly form the chrominance plane. a and b represent opposite color dimensions. Therefore, the hue differences and saturation differences of the output color matrix and the target color matrix in the Lab color space may be represented based on the chromaticity coordinates.

In this embodiment of this application, determining the global hue error based on the chromaticity coordinates corresponding to each color patch includes the following: for a color patch pair represented by the same column of elements in the output color matrix and the target color matrix, a hue error of the color patch pair is determined based on an included angle between chromaticity coordinate vectors of the color patch pair, where each of the chromaticity coordinate vectors is a vector whose start point is the origin and whose end point is chromaticity coordinates; and the global hue error is calculated based on a weighted average value of hue errors of multiple color patch pairs.

The color patch pair refers to two color patches represented by elements in the same column in the output color matrix and the target color matrix. For example, a color patch represented by the fifth column of elements in the output color matrix and a color patch represented by the fifth column of elements in the target color matrix form a color patch pair, and a color patch represented by the 24th column of elements in the output color matrix and a color patch represented by the 24th column of elements in the target color matrix form a color patch pair. Illustratively, in the chromaticity plane, the chromaticity coordinates of the color patch are a point in the chromaticity plane, the origin of the chromaticity plane is used as the start point, the chromaticity coordinates are used as the end point, and the vector pointing from the start point to the end point is used as the chromaticity coordinate vector of the color patch. Since the chromaticity coordinates of the same color patch pair are different, the chromaticity coordinate vectors are different. The chromaticity coordinate vectors of the color patch pair have a certain included angle. The hue error of the color patch pair is represented by the included angle. The global hue error of the output color matrix and the target color matrix is a weighted average of the global hue error of 24 color patches.

For example, for any two chromaticity coordinates ($a_1$, $b_1$) and ($a_2$, $b_2$), the angle between the two chromaticity coordinates in the coordinate system is used to represent the hue error by using the formula

$$\theta = \arccos \frac{(a_1, b_1) \cdot (a_2, b_2)}{|(a_1, b_1)| \cdot |(a_2, b_2)|}$$
. For a color patch pair i, the chromaticity coordinates of the color patch belonging to the output color matrix are ($a_i^o$, $b_i^o$), and the chromaticity coordinates of the color patch belonging to the target color matrix are ($a_i^t$, $b_i^t$). The hue error of the color patch pair i is $\theta_i = \arccos \frac{(a_i^o, b_i^o) \cdot (a_i^t, b_i^t)}{|(a_i^o, b_i^o)| \cdot |(a_i^t, b_i^t)|}$. The global hue error of the output color matrix and the target color matrix may be represented by $\theta_1, \theta_2, \ldots \theta_{24}$. For example,

$$\Delta Hue = \sum_{i=1}^{24} w_i \theta_i$$
, where $\sum_{i=1}^{24} w_i = 1$.

$\Delta Hue$ denotes the global hue error of the output color matrix and the target color matrix. $w_i$ denotes a weight that can be determined based on practical requirements. If $w_i$ are identical, $\Delta Hue$ is the arithmetic mean of $\theta_1, \theta_2, \ldots \theta_{24}$. In this embodiment of this application, human eyes perceive minimal differences among black, white, and gray. Therefore, the weights of the hue errors of the color patch pairs corresponding to black, white, and gray may be set to zero. This prevents the influence of the color patches corresponding to black, white, and gray on the color evaluation of the color patches, thereby improving the accuracy of the global hue error.

In this embodiment of this application, determining the saturation constraint regularization term based on the chromaticity coordinates corresponding to each color patch includes determining an average value of first distances between the origin and chromaticity coordinates of multiple color patches represented by multiple columns of elements in the output color matrix and determining an average value of second distances between the origin and chromaticity coordinates of multiple color patches represented by multiple columns of elements in the target color matrix; and determining a ratio of the average value of the first distances to the average value of the second distances and determining the saturation constraint regularization term based on the difference between the ratio and 1. Illustratively, in the chromaticity plane, the saturation of a color patch may be represented by the distance between the chromaticity coordinates of the color patch and the origin. For the multiple color patches represented by the multiple columns of elements in the output color matrix, the first distance between the chromaticity coordinates of each color patch and the origin is calculated, and the average value of the first distances corresponding to the multiple color patches is calculated to represent the saturation of the output color matrix. For the multiple color patches in the target color matrix, the second distance between the chromaticity coordinates of each color patch and the origin is calculated, and the average value of the second distances corresponding to the multiple color patches is calculated to represent the saturation of the target color matrix. The saturation constraint regularization item is determined based on the ratio of the average value of the first distances to the average value of the second distances and the difference between the ratio and 1. "1" refers to the ratio of the second distance to the second distance. For example, for a color patch i in the output color matrix, the saturation of the color patch i is represented by a first distance $|(a_i^o, b_i^o)|$, and since human eyes perceive minimal differences among black, white, and gray, the saturation of color patches corresponding to black, white, and gray can be disregarded, with the saturation of only the remaining 18 color patches being focused on, so that the saturation of the output color matrix is represented by the average value $\frac{1}{18}\sum_{i=1}^{18}|(a_i^o, b_i^o)|$ of the first distances. For the color patch i in the target color matrix, the saturation of the color patch i is represented by a second distance $|(a_i^t, b_i^t)|$, and since human eyes perceive minimal differences among black, white, and gray, the saturation of color patches corresponding to black, white, and gray can be disregarded, with the saturation of only the remaining 18 color patches being focused on, so that the saturation of the target color matrix is represented by the average value $\frac{1}{18}\sum_{i=1}^{18}|(a_i^t, b_i^t)|$ of the second distances. The ratio of the average value of the first distances to the average value of the second distances is $\frac{\frac{1}{18}\sum_{i=1}^{18}|(a_i^o,b_i^o)|}{\frac{1}{18}\sum_{i=1}^{18}|(a_i^t,b_i^t)|}$. The difference between the ratio and 1 is $\frac{\frac{1}{18}\sum_{i=1}^{18}|(a_i^o,b_i^o)|}{\frac{1}{18}\sum_{i=1}^{18}|(a_i^t,b_i^t)|} - \frac{\frac{1}{18}\sum_{i=1}^{18}|(a_i^t,b_i^t)|}{\frac{1}{18}\sum_{i=1}^{18}|(a_i^t,b_i^t)|}$ that serves as the saturation constraint regularization term for representing the saturation difference between the output color matrix and the target color matrix. Since the saturation constraint regularization term of interest in practical application is positive, the absolute value of the saturation constraint regularization term may be taken, that is,

$$\Delta Chroma = \left| \frac{\frac{1}{18}\sum_{i=1}^{18}|(a_i^o,b_i^o)|}{\frac{1}{18}\sum_{i=1}^{18}|(a_i^t,b_i^t)|} - \frac{\frac{1}{18}\sum_{i=1}^{18}|(a_i^t,b_i^t)|}{\frac{1}{18}\sum_{i=1}^{18}|(a_i^t,b_i^t)|} \right|$$

. In this embodiment of this application, a constraint parameter may be introduced to adjust the weight of $\Delta Chroma$. The constraint parameter may be a parameter determined depending on the actual situation, for example, may be determined based on a tolerance degree of the relative saturation difference. The value of the parameter may be, for example, 0.1.

In S240, the loss function is constructed based on the sum of the saturation constraint regularization term and the global hue error.

For example, the loss function may be expressed as $E = \Delta Hue + \lambda \cdot \Delta Chroma$. E denotes the loss function. $\Delta Hue$ denotes the global hue error. $\Delta Chroma$ denotes the saturation constraint regularization term. $\lambda$ denotes the constraint parameter. The coordinates of the output color matrix and the target color matrix in the Lab color space are substituted into the formula to obtain the value of the loss function.

In this embodiment of this application, considering that the different perceptual responses of human eyes to the global hue error and the saturation constraint regularization term and that the sensitivity to the global hue error is much higher than the sensitivity to the saturation constraint regularization term, the global hue error is introduced to construct the loss function and calculate the value of the loss function so that correction from the human eyes' perceptual perspective can be performed. The saturation constraint regularization term is used to constrain the arbitrary scaling of saturation in the chromaticity space, without affecting the optimization result of the global hue error. This ensures that the color of the corrected image is closer to the color perceived by human eyes, achieving a color correction effect more in line with human eyes' perception.

In S250, the color correction matrix is updated based on a value of the loss function until the value of the loss function converges to obtain an optimal color correction matrix so that color correction of a to-be-processed image acquired by an image acquisition device can be performed by using the optimal color correction matrix.

The color correction matrix optimization method provided by this embodiment of this application is an optimization on the previous embodiments. Chromaticity coordinates corresponding to each color patch among multiple color patches represented by multiple columns of elements in the output color matrix and the target color matrix are determined, where the chromaticity coordinates are coordinates of the output color matrix and the target color matrix in a chromaticity plane after the output color matrix and the target color matrix are transformed into the Lab color space. Based on the chromaticity coordinates of each color patch, the global hue error and the saturation constraint regularization term of the output color matrix and target color matrix in the Lab color space are determined. The loss function is constructed based on the sum of the saturation constraint regularization term and the global hue error. The method fully takes into account the higher sensitivity of human eyes to the hue error. The color correction matrix is optimized based on the global hue error. The optimization process is constrained by the saturation constraint regularization term to avoid arbitrary scaling of saturation. This ensures that the optimized image color is closer to the color perceived by human eyes, thereby improving the user experience.

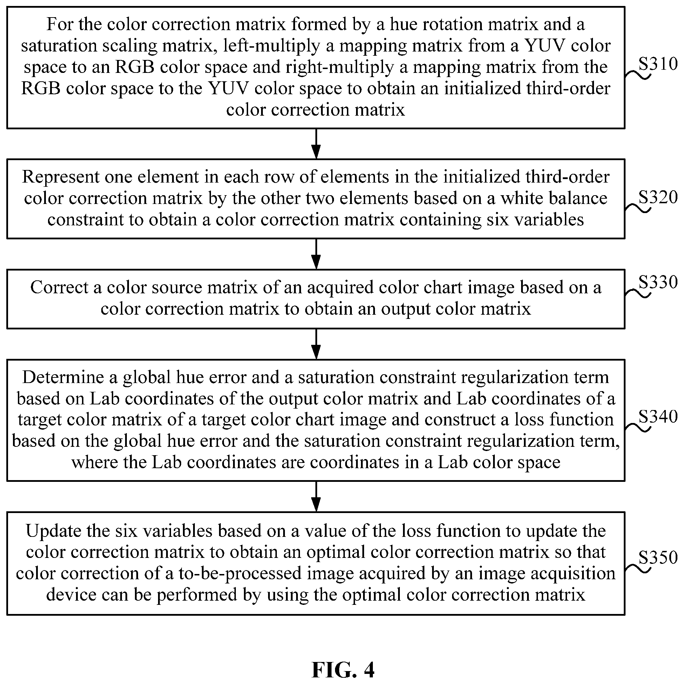

FIG. 4 is another flowchart of a color correction matrix optimization method according to an embodiment of this application. This embodiment is an optimization on the previous embodiments. It should be mentioned that for technical details not described in detail in this embodiment, see any previous embodiment.

For example, as shown in FIG. 4, the method includes the following steps:

In S310, the color correction matrix formed by a hue rotation matrix and a saturation scaling matrix is left-multiplied by a mapping matrix from a YUV color space to an RGB color space and right-multiplied by a mapping matrix from the RGB color space to the YUV color space to obtain an initialized third-order color correction matrix.

YUV is a color encoding method. YIQ, Y'UV, YUV, YCbCr, and YPbPr may all be referred to as YUV "Y" represents luminance, that is, a grayscale value. "U" and "V" represent chrominance for describing image color and image saturation, that is, for specifying the color of a pixel. The YIQ color space is taken as an example for detailed description. The YIQ color space is a color space in which luminance and chrominance are relatively independent. The YIQ color space is linear to the RGB color space, so the linear transformation of the YIQ color space can be linearly mapped to the linear transformation of the RGB space. In the YIQ color space, a hue rotation parameter $\alpha$ is designed to construct a hue rotation

matrix $M_R = \begin{bmatrix} 1 & 0 & 0 \\ 0 & cos\alpha & -sin\alpha \\ 0 & sin\alpha & cos\alpha \end{bmatrix}$, and a saturation scaling parameter $s$ is designed to construct a saturation scaling

matrix $M_S = \begin{bmatrix} 1 & 0 & 0 \\ 0 & s & 0 \\ 0 & 0 & s \end{bmatrix}$. The linear transformation of the YIQ color gamut is finally expressed as $T = M_S \cdot M_R$. The

initialized color correction matrix $BaseCCM = M_{YIQ2RGB} \cdot T \cdot M_{RGB2YIQ}$ is determined based on T. $M_{YIQ2RGB}$ denotes the mapping matrix from the YIQ color space to the RGB color space. $M_{RGB2YIQ}$ denotes the mapping matrix from the RGB color space to the YIQ color space. The initialized third-order color correction matrix $\begin{bmatrix} c_{11} & c_{12} & c_{13} \\ c_{21} & c_{22} & c_{23} \\ c_{31} & c_{32} & c_{33} \end{bmatrix}$ is thus obtained.

In S320, one element in each row of elements in the initialized third-order color correction matrix is represented by the other two elements based on a white balance constraint to obtain a color correction matrix containing six variables.

Illustratively, a third-order matrix including nine parameters may be $\begin{bmatrix} c_{11} & c_{12} & c_{13} \\ c_{21} & c_{22} & c_{23} \\ c_{31} & c_{32} & c_{33} \end{bmatrix}$. The parameter set $S1$ = $\{c_{11}, c_{12}, c_{13}, c_{21}, c_{22}, c_{23}, c_{31}, c_{32}, c_{33}\}$ includes nine variables. If the matrix is used as the color correction matrix, the white balance constraint is required to be followed between the parameters. That is, the sum of parameters in each row of the matrix is equal to 1. Therefore, based on the white balance constraint, one element in each row of the third-order color correction matrix may be represented by using the other two elements to obtain a variable set, for example, $S2 = \{c_{11}, c_{13}, c_{22}, c_{23}, c_{31}, c_{32}\}$, $c_{12} = 1 - c_{11} - c_{13}$. Non-diagonal elements may also be selected to form a variable set $S2 = \{c_{12}, c_{13}, c_{21}, c_{23}, c_{31}, c_{32}\}$. Thus, a third-order matrix having nine variables is expressed as a third-order matrix having six variables. If the diagonal elements are expressed by non-diagonal elements, the third-order matrix having six variables is obtained:

$$CCM = \begin{bmatrix} 1 - c_{12} - c_{13} & c_{12} & c_{13} \\ c_{21} & 1 - c_{21} - c_{23} & c_{23} \\ c_{31} & c_{32} & 1 - c_{31} - c_{32} \end{bmatrix}.$$

In S330, a color source matrix of an acquired color chart image is corrected based on a color correction matrix to obtain an output color matrix.

In S340, a global hue error and a saturation constraint regularization term are determined based on Lab coordinates of the output color matrix and Lab coordinates of a target color matrix of a target color chart image, and a loss function is constructed based on the global hue error and the saturation constraint regularization term, where the Lab coordinates are coordinates in a Lab color space.

In S350, the six variables are updated based on a value of the loss function so that the color correction matrix is updated to obtain an optimal color correction matrix so that color correction of a to-be-processed image acquired by an image acquisition device can be performed by using the optimal color correction matrix.

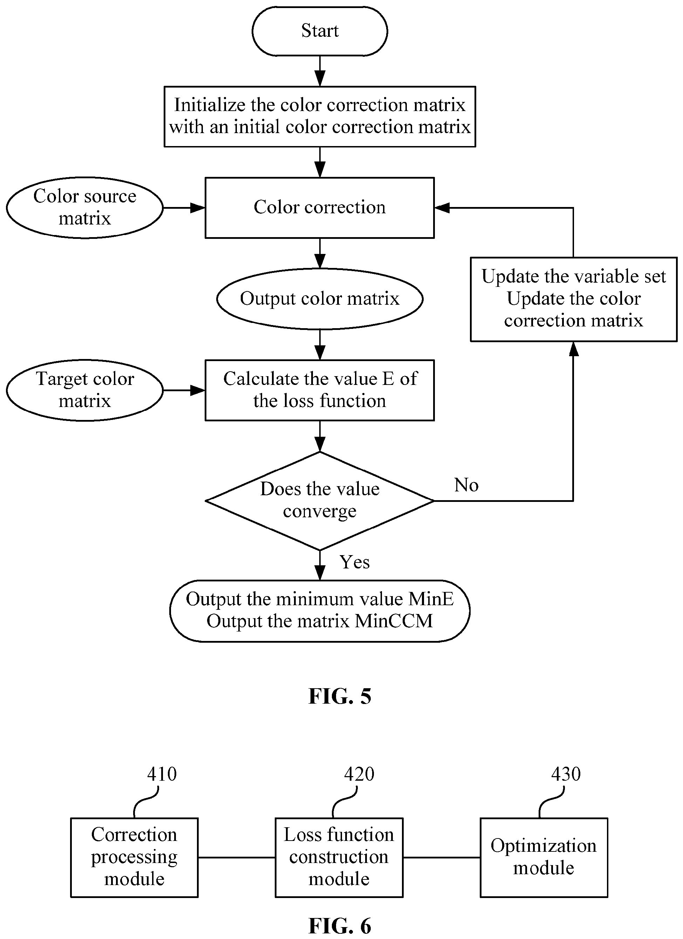

Illustratively, an implementation process of this embodiment of this application is shown in FIG. 5. Color correction is performed on the color source matrix based on the color correction matrix (CCM), resulting in an output color matrix. The value of the loss function is calculated based on the output color matrix and the target color matrix. The color correction matrix is updated iteratively based on the value of the loss function until the value of the loss function converges, yielding the minimum value of the loss function and the corresponding optimal color correction matrix.

In this embodiment of this application, the process of updating the color correction matrix is actually updating and optimizing the six variables. The process of optimizing the color correction matrix is an unconstrained optimization process. The optimization algorithm is not limited. For example, the optimization algorithm may be a gradient descent method, a Newton method, a quasi-Newton method, or a conjugate gradient method. The process of optimizing the color correction matrix containing nine variables based on the white balance constraint is a constrained optimization process while the solution of this embodiment of this application is simplified into an unconstrained optimization process, accelerating the optimization convergence.

In this embodiment of this application, an initialization process of the color correction matrix includes determining a hue rotation factor and a saturation scaling factor based on a value range of the hue rotation factor in the hue rotation matrix and a value range of the saturation scaling factor in the saturation scaling matrix and determining at least two color correction matrixes based on the hue rotation factor and the saturation scaling factor; alternatively, the initialization process of the color correction matrix includes randomly generating at least two sets of hue rotation factors and saturation scaling factors based on a probability distribution model of the hue rotation factors and the saturation scaling factors and determining at least two color correction matrixes based on the at least two sets of hue rotation factors and saturation scaling factors. In this embodiment of this application, two solutions are illustratively provided for determining color correction matrixes in batches. In actual application, the solution for the batch generation of color correction matrixes may be selected depending on the actual situation, which is not limited. All ideas of batch generation fall within the protection scope of this application. For example, the hue rotation factor is $\alpha$ in the hue rotation matrix $M_R$, and the saturation scaling factor is s in the saturation scaling matrix $M_S$. The value range of the hue rotation factor and the value range of the saturation scaling factor may be determined in advance depending on the actual situation, $\alpha \in [\alpha_{min}, \alpha_{max}]$, and $s \in [s_{min}, s_{max}]$. A certain step length may be preset. The hue rotation factor and the saturation scaling factor may be selected from the value ranges. For example, the hue rotation factors $\alpha_1$ and $\alpha_2$ and the saturation scaling factors $s_1$ and $s_2$ are selected to form four combinations $(\alpha_1, s_1)$, $(\alpha_2, s_1)$, $(\alpha_1, s_2)$ and $(\alpha_1, s_2)$. The four combinations are substituted into T. Transformation is performed from the YUV color space to the RGB color space to obtain four color correction matrixes. For example, the number of selected hue rotation factors and the number of selected saturation scaling factors are not limited and may be determined based on the number of initialized color matrixes required to be determined.

The solution of this embodiment of this application may alternatively be establishing a probability distribution model of $\alpha$ and s, for example, a uniform distribution model, randomly selecting at least two sets $(\alpha, s)$ from the probability distribution model, substituting the at least two sets into T, and performing transformation from the YUV color space to the RGB color space to obtain at least two initialized color matrixes.

In this embodiment of this application, the at least two sets $(\alpha, s)$ may alternatively be determined in another manner, for example, random generation, to obtain the at least two color correction matrixes to achieve the batch generation of initialized color correction matrixes. This avoids easily falling into the local minimum when optimizing a single initialized color correction matrix, enabling the optimization of at least two initialized color correction matrixes to search for the global minimum, and improving the optimization accuracy. In this embodiment of this application, the number of selected hue rotation factors and the number of saturation scaling factors can reach at least the magnitude of hundreds, allowing for the batch generation of initialized color correction matrixes with a sufficiently large number. This ensures a more precise search for the optimal solution while avoiding the local minimum.

After determining the at least two color correction matrixes, the values of elements at corresponding positions in the color correction matrixes are extracted so that the variable set S2 is initialized, and iterative solving is performed to obtain the optimal solution for S2.

In this embodiment of this application, performing correction processing on the color source matrix of the acquired color chart image based on the color correction matrix to obtain the output color matrix includes performing the correction processing on the color source matrix of the acquired color chart image based on the at least two color correction matrixes to obtain at least two output color matrixes; and updating the color correction matrix based on the value of the loss function until the value of the loss function converges to obtain the optimal color correction matrix includes optimizing the at least two color correction matrixes based on the value of the loss function until the value of the loss function converges to the minimum value to obtain at least two minimum values; and determining the smallest value of the at least two minimum values and using the updated color correction matrix corresponding to the smallest value as the optimal color correction matrix. Illustratively, based on the at least two color correction matrixes, correction processing is performed on the color source matrix to obtain at least two output color matrixes. The color correction processes may be executed in parallel without mutual interference. The color correction process may be performed in parallel without affecting each other. It is assumed that the number of the at least two color correction matrixes $CCM_j$ is $N$. The color correction matrixes are traversed, the color source matrix is corrected to obtain N output color matrixes. The value of the loss function is determined based on the global hue error and the saturation constraint regularization term of the output color matrix and the target color matrix in the Lab color space. The N color correction matrixes are updated and optimized until $N$ minimum values $MinE_j$ and the corresponding optimization matrixes $MinCCM_j$ are obtained. The smallest value

$$opt = \underset{j=1,2,\dots,N}{\mathrm{argmin}}(MinE_j)$$

is selected from the minimums to obtain the global minimum value $OptE = MinE_{ope}$ and the corresponding global optimal solution $OptCCM = MinCCM_{ope}$ as the optimal color correction matrix. In this embodiment of this application, at least two color correction matrixes are determined to enable the batch generation of color correction matrixes, thereby maximizing the dispersion of optimization starting points. This improves the probability of obtaining the global minimum and avoids getting stuck in the local minimum and affecting convergence in generating the global minimum during the optimization of a single color correction matrix.

FIG. 6 is a diagram illustrating the structure of a color correction matrix optimization apparatus according to an embodiment of this application. The color correction matrix optimization apparatus provided in this embodiment includes a correction processing module 410, a loss function construction module 420, and an optimization module 430.

The correction processing module 410 is configured to perform correction processing on a color source matrix of an acquired color chart image based on a color correction matrix to obtain an output color matrix.

The loss function construction module 420 is configured to determine a global hue error and a saturation constraint regularization term based on Lab coordinates of the output color matrix and Lab coordinates of a target color matrix of a target color chart image and construct a loss function based on the global hue error and the saturation constraint regularization term, where the Lab coordinates are coordinates in a Lab color space.

The optimization module 430 is configured to update the color correction matrix based on a value of the loss function until the value of the loss function converges to obtain an optimal color correction matrix so that color correction is performed on a to-be-processed image acquired by an image acquisition device by using the optimal color correction matrix.

In this embodiment of this application, the loss function construction module 420 includes a coordinate determination unit, a difference data determination unit, and a value determination unit.

The coordinate determination unit is configured to determine chromaticity coordinates corresponding to each color patch among multiple color patches represented by multiple columns of elements in the output color matrix and the target color matrix, where the chromaticity coordinates are coordinates of the output color matrix and the target color matrix in a chromaticity plane after the output color matrix and the target color matrix are transformed into the Lab color space.

The difference data determination unit is configured to determine the global hue error and the saturation constraint regularization term based on the chromaticity coordinates corresponding to each color patch.

The value determination unit is configured to construct the loss function based on a sum of the saturation constraint regularization term and the global hue error.

In this embodiment of this application, the difference data determination unit includes a hue error determination subunit and a global hue error calculation unit.

The hue error determination subunit is configured to, for a color patch pair represented by the same column of elements in the output color matrix and the target color matrix, determine a hue error of the color patch pair based on an included angle between chromaticity coordinate vectors of the color patch pair, where each of the chromaticity coordinate vectors is a vector whose start point is the origin and whose end point is the chromaticity coordinates.

The global hue error calculation unit is configured to calculate the global hue error based on a weighted average value of hue errors of multiple color patch pairs.

In this embodiment of this application, the difference data determination unit includes a distance data determination subunit and a relative saturation difference determination subunit.

The distance data determination subunit is configured to determine an average value of first distances between the origin and chromaticity coordinates of multiple color patches represented by multiple columns of elements in the output color matrix and determine an average value of second distances between the origin and chromaticity coordinates of multiple color patches represented by multiple columns of elements in the target color matrix.

The relative saturation difference determination subunit is configured to determine a ratio of the average value of the first distances to the average value of the second distances and determine the saturation constraint regularization term based on the difference between the ratio and 1.

In this embodiment of this application, the apparatus also includes a matrix construction module and a transformation module.

The matrix construction module is configured to, for the color correction matrix formed by a hue rotation matrix and a saturation scaling matrix, left-multiply a mapping matrix from a YUV color space to an RGB color space and right-multiply a mapping matrix from the RGB color space to the YUV color space to obtain an initialized third-order color correction matrix.

The transformation module is configured to represent one element in each row of elements in the initialized third-order color correction matrix by the other two elements based on a white balance constraint to obtain the color correction matrix containing six variables.

The optimization module 430 is configured to update the six variables based on the value of the loss function to update the color correction matrix.

In this embodiment of this application, the apparatus also includes a first factor selection unit and a first matrix construction unit or includes a second factor unit and a second matrix construction unit.

The first factor selection unit is configured to determine a hue rotation factor and a saturation scaling factor based on a value range of the hue rotation factor in the hue rotation matrix and a value range of the saturation scaling factor in the saturation scaling matrix.

The first matrix construction unit is configured to determine at least two color correction matrixes based on the hue rotation factor and the saturation scaling factor.

The second factor unit is configured to randomly generate at least two sets of hue rotation factors and saturation scaling factors based on a probability distribution model of the hue rotation factors and the saturation scaling factors.

The second matrix construction unit is configured to determine at least two color correction matrixes based on the at least two sets of hue rotation factors and saturation scaling factors.

In this embodiment of this application, the correction processing module 410 is configured to perform the correction processing on the color source matrix of the acquired color chart image based on the at least two color correction matrixes to obtain at least two output color matrixes.

The optimization module 430 includes a minimum value determination unit and an optimal color correction matrix determination unit.

The minimum value determination unit is configured to optimize the at least two color correction matrixes based on the value of the loss function until the value of the loss function converges to the minimum value to obtain at least two minimum values.

The optimal color correction matrix determination unit is configured to determine the smallest value of the at least two minimum values and use the updated color correction matrix corresponding to the smallest value as the optimal color correction matrix.

The color correction matrix optimization apparatus of this embodiment of this application may be configured to perform the color correction matrix optimization method of any previous embodiment and has corresponding functions and beneficial effects.

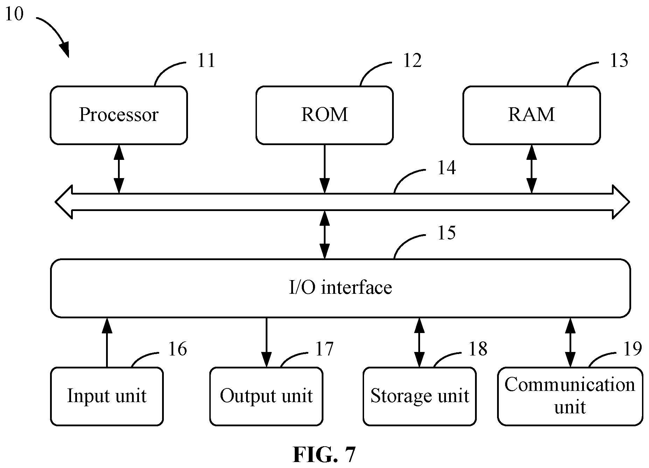

FIG. 7 is a diagram illustrating the structure of an electronic device according to an embodiment of this application. Electronic devices 10 are intended to represent various forms of digital computers, for example, laptop computers, desktop computers, worktables, personal digital assistants, servers, blade servers, mainframe computers and other applicable computers. The electronic device 10 may also represent various forms of mobile apparatuses, for example, a personal digital assistant, a cellphone, a smartphone, a user equipment, a wearable device (such as a helmet, glasses, or a watch), or another similar computing apparatus. Herein the shown components, the connections and relationships between these components, and the functions of these components are illustrative and are not intended to limit the implementation of this application as described and/or claimed herein.

As shown in FIG. 7, the electronic device 10 includes at least one processor 11 and a memory, such as a read-only memory (ROM) 12 or a random-access memory (RAM) 13, communicatively connected to the at least one processor 11. The memory stores a computer program executable by the at least one processor. The at least one processor 11 may perform various types of appropriate operations and processing according to a computer program stored in a read-only memory (ROM) 12 or a computer program loaded from a storage unit 18 to a random-access memory (RAM) 13. The RAM 13 may also store various programs and data required for the operation of the electronic device 10. The processors 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard and a mouse, an output unit 17 such as various types of displays and speakers, the storage unit 18 such as a magnetic disk and an optical disk, and a communication unit 19 such as a network card, a modem and a wireless communication transceiver. The communication unit 19 allows the electronic device 10 to exchange information/data with other devices over a computer network such as the Internet and/or various telecommunications networks and wireless networks.

The at least one processor 11 may be various general-purpose and/or special-purpose processing components having processing and computing capabilities. Some examples of a processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The at least one processor 11 performs various preceding methods and processing, such as the color correction matrix optimization method.

In some examples, the color correction matrix optimization method may be implemented as computer programs tangibly contained in a computer-readable storage medium such as the storage unit 18. In some embodiments, part or all of computer programs may be loaded and/or installed onto the electronic device 10 via the ROM 12 and/or the communication unit 19. When the computer programs are loaded into the RAM 13 and executed by the processor 11, one or more steps of the preceding method may be performed. Alternatively, in other embodiments, the processor 11 may be configured, in any other suitable manner (for example, by means of firmware), to perform the color correction matrix optimization method.

Herein various embodiments of the systems and techniques described in the preceding may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting data and instructions to the memory system, the at least one input apparatus and the at least one output apparatus.

Computer programs for implementation of the methods of this application may be written in one programming language or any combination of multiple programming languages. These computer programs may be provided for a processor of a general-purpose computer, a special-purpose computer or another programmable data processing apparatus such that the computer programs, when executed by the processor, cause functions/operations specified in the flowcharts and/or block diagrams to be implemented. The computer programs may be executed entirely on a machine, partly on a machine, as a stand-alone software package, partly on a machine and partly on a remote machine, or entirely on a remote machine or a server.

In the context of this application, the computer-readable storage medium may be a tangible medium that may include or store a computer program for use by or in connection with an instruction execution system, apparatus, or device. The computer-readable storage medium may include, but is not limited to, an electronic, magnetic, optical, electromagnetic, infrared, or semiconductor system, apparatus, or device or any appropriate combination thereof. Alternatively, the computer-readable storage medium may be a machine-readable signal medium. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof. The computer-readable storage medium may be a non-transitory computer-readable storage medium.

In order that interaction with a user is provided, the systems and techniques described herein may be implemented on the electronic device 10. The electronic device 10 has a display device (for example, a cathode-ray tube (CRT) or a liquid-crystal display (LCD) monitor) for displaying information to the user; and a keyboard and a pointing device (for example, a mouse or a trackball) through which the user can provide input for the electronic device 10. Other types of apparatuses may also be used for providing interaction with a user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server avoids the problem of difficult management and weak service scalability in a physical host and a related virtual private server (VPS) service in the related art.

It is to be understood that various forms of the preceding flows may be used with steps reordered, added, or removed. For example, the steps described in this application may be executed in parallel, in sequence or in a different order as long as the desired results of the technical solutions in this application are achieved. The execution sequence of these steps is not limited herein.

## Claims

1. A color correction matrix optimization method, comprising:

   performing correction processing on a color source matrix of an acquired color chart image based on a color correction matrix to obtain an output color matrix;
   determining a global hue error and a saturation constraint regularization term based on Lab coordinates of the output color matrix and Lab coordinates of a target color matrix of a target color chart image and constructing a loss function based on the global hue error and the saturation constraint regularization term, wherein the Lab coordinates are coordinates in a Lab color space; and
   updating the color correction matrix based on a value of the loss function until the value of the loss function converges to obtain an optimal color correction matrix so that color correction is performed on a to-be-processed image acquired by an image acquisition device by using the optimal color correction matrix.

2. The color correction matrix optimization method of claim 1, wherein determining the global hue error and the saturation constraint regularization term based on the Lab coordinates of the output color matrix and the Lab coordinates of the target color matrix of the target color chart image and constructing the loss function based on the global hue error and the saturation constraint regularization term comprises:

   determining chromaticity coordinates corresponding to each color patch among a plurality of color patches represented by a plurality of columns of elements in the output color matrix and a plurality of columns of elements in the target color matrix, wherein the chromaticity coordinates are coordinates of the output color matrix and the target color matrix in a chromaticity plane after the output color matrix and the target color matrix are transformed into the Lab color space;
   determining the global hue error and the saturation constraint regularization term based on the chromaticity coordinates corresponding to each color patch; and
   constructing the loss function based on a sum of the saturation constraint regularization term and the global hue error.

3. The color correction matrix optimization method of claim 2, wherein determining the global hue error based on the chromaticity coordinates corresponding to each color patch comprises:

   for a color patch pair represented by a same column of elements in the output color matrix and the target color matrix, determining a hue error of the color patch pair based on an included angle between chromaticity coordinate vectors of the color patch pair, wherein each of the chromaticity coordinate vectors is a vector whose start point is an origin and whose end point is the chromaticity coordinates; and
   calculating the global hue error based on a weighted average value of hue errors of a plurality of color patch pairs.

4. The color correction matrix optimization method of claim 2, wherein determining the saturation constraint regularization term based on the chromaticity coordinates corresponding to each color patch comprises:

   determining an average value of first distances between an origin and chromaticity coordinates of a plurality of color patches represented by the plurality of columns of elements in the output color matrix and determining an average value of second distances between the origin and chromaticity coordinates of a plurality of color patches represented by the plurality of columns of elements in the target color matrix; and

determining a ratio of the average value of the first distances to the average value of the second distances and determining the saturation constraint regularization term based on a difference between the ratio and 1.

5. The color correction matrix optimization method of claim 1, wherein before updating the color correction matrix based on the value of the loss function, the method further comprises:

for the color correction matrix formed by a hue rotation matrix and a saturation scaling matrix, left-multiplying a mapping matrix from a luminance and chrominance, YUV, color space to a red, green, and blue, RGB, color space and right-multiplying a mapping matrix from the RGB color space to the YUV color space to obtain an initialized third-order color correction matrix; and

representing one element in each row of elements in the initialized third-order color correction matrix by other two elements based on a white balance constraint to obtain the color correction matrix containing six variables; and wherein updating the color correction matrix based on the value of the loss function comprises:

updating the six variables based on the value of the loss function to update the color correction matrix.

6. The color correction matrix optimization method of claim 1 or 5, wherein an initialization process of the color correction matrix comprises one of the following:

determining a hue rotation factor and a saturation scaling factor based on a value range of the hue rotation factor in the hue rotation matrix and a value range of the saturation scaling factor in the saturation scaling matrix and determining at least two color correction matrixes based on the hue rotation factor and the saturation scaling factor; or

randomly generating at least two sets of hue rotation factors and saturation scaling factors based on a probability distribution model of the hue rotation factors and the saturation scaling factors and determining at least two color correction matrixes based on the at least two sets of hue rotation factors and saturation scaling factors.

7. The color correction matrix optimization method of claim 6, wherein performing the correction processing on the color source matrix of the acquired color chart image based on the color correction matrix to obtain the output color matrix comprises:

performing the correction processing on the color source matrix of the acquired color chart image based on the at least two color correction matrixes to obtain at least two output color matrixes; and

wherein updating the color correction matrix based on the value of the loss function until the value of the loss function converges to obtain the optimal color correction matrix comprises:

optimizing the at least two color correction matrixes based on the value of the loss function until the value of the loss function converges to a minimum value to obtain at least two minimum values; and

determining a smallest value of the at least two minimum values and using the updated color correction matrix corresponding to the smallest value as the optimal color correction matrix.

8. A color correction matrix optimization apparatus, comprising:

a correction processing module configured to perform correction processing on a color source matrix of an acquired color chart image based on a color correction matrix to obtain an output color matrix;

a loss function construction module configured to determine a global hue error and a saturation constraint regularization term based on Lab coordinates of the output color matrix and Lab coordinates of a target color matrix of a target color chart image and construct a loss function based on the global hue error and the saturation constraint regularization term, wherein the Lab coordinates are coordinates in a Lab color space; and

an optimization module configured to update the color correction matrix based on a value of the loss function until the value of the loss function converges to obtain an optimal color correction matrix so that color correction is performed on a to-be-processed image acquired by an image acquisition device by using the optimal color correction matrix.

9. An electronic device, comprising:

at least one processor; and
a memory communicatively connected to the at least one processor,
wherein the memory stores a computer program executable by the at least one processor, and the computer program is executed by the at least one processor to enable the at least one processor to perform the color correction matrix optimization method of any one of claims 1 to 7.

10. A computer-readable storage medium storing a computer program which, when executed by a processor, causes the processor to perform the color correction matrix optimization method of any one of claims 1 to 7.

| Perform correction processing on a color source matrix of an acquired color chart image based on a color correction matrix to obtain an output color matrix | S110 |

| Determine a global hue error and a saturation constraint regularization term based on Lab coordinates of the output color matrix and Lab coordinates of a target color matrix of a target color chart image and construct a loss function based on the global hue error and the saturation constraint regularization term, where the Lab coordinates are coordinates in a Lab color space | S120 |

| Update the color correction matrix based on a value of the loss function until the value of the loss function converges to obtain an optimal color correction matrix so that color correction of a to-be-processed image acquired by an image acquisition device can be performed by using the optimal color correction matrix | S130 |

**FIG. 1**

Entire pixel region

Partial pixel region

**FIG. 2**

Perform correction processing on a color source matrix of an acquired color chart image based on a color correction matrix to obtain an output color matrix ⟩S210

Determine chromaticity coordinates corresponding to each color patch among multiple color patches represented by multiple columns of elements in the output color matrix and the target color matrix, where the chromaticity coordinates are coordinates of the output color matrix and the target color matrix in a chromaticity plane after the output color matrix and the target color matrix are transformed into the Lab color space ⟩S220

Determine the global hue error and the saturation constraint regularization term based on the chromaticity coordinates corresponding to each color patch ⟩S230

Construct the loss function based on a sum of the saturation constraint regularization term and the global hue error ⟩S240

Update the color correction matrix based on a value of the loss function until the value of the loss function converges to obtain an optimal color correction matrix so that color correction of a to-be-processed image acquired by an image acquisition device can be performed by using the optimal color correction matrix ⟩S250

**FIG. 3**

For the color correction matrix formed by a hue rotation matrix and a saturation scaling matrix, left-multiply a mapping matrix from a YUV color space to an RGB color space and right-multiply a mapping matrix from the RGB color space to the YUV color space to obtain an initialized third-order color correction matrix — S310

Represent one element in each row of elements in the initialized third-order color correction matrix by the other two elements based on a white balance constraint to obtain a color correction matrix containing six variables — S320

Correct a color source matrix of an acquired color chart image based on a color correction matrix to obtain an output color matrix — S330

Determine a global hue error and a saturation constraint regularization term based on Lab coordinates of the output color matrix and Lab coordinates of a target color matrix of a target color chart image and construct a loss function based on the global hue error and the saturation constraint regularization term, where the Lab coordinates are coordinates in a Lab color space — S340

Update the six variables based on a value of the loss function to update the color correction matrix to obtain an optimal color correction matrix so that color correction of a to-be-processed image acquired by an image acquisition device can be performed by using the optimal color correction matrix — S350

**FIG. 4**

Start

Initialize the color correction matrix
with an initial color correction matrix

Color source
matrix → Color correction ← Update the variable set
Update the color
correction matrix

Output color matrix

Target color
matrix → Calculate the value E of
the loss function

Does the value
converge → No

Yes

Output the minimum value MinE
Output the matrix MinCCM

**FIG. 5**

410
Correction
processing
module

420
Loss function
construction
module

430
Optimization
module

**FIG. 6**

10

11
Processor

12
ROM

13
RAM

14

15
I/O interface

16
Input unit

17
Output unit

18
Storage unit

19
Communication unit

**FIG. 7**

## INTERNATIONAL SEARCH REPORT

International application No.

**PCT/CN2022/142609**

| A. | CLASSIFICATION OF SUBJECT MATTER |
|---|---|

G06T 5/00(2006.01)i;H04N9/64(2023.01)i

According to International Patent Classification (IPC) or to both national classification and IPC

| B. | FIELDS SEARCHED |
|---|---|

Minimum documentation searched (classification system followed by classification symbols)

IPC:G06T,H04N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 颜色, 色彩, 矫正, 矩阵, 色度, 色相, 饱和度, 损失, 更新, 收敛, 优化, 约束, 向量, 角, 误差, 选择, 伸缩, color, correction, matrix, chroma, hue, saturation, loss, update, convergence, optimization, constraint, vector, angle, error, selection, scale, lab, YUV, RGB

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112073703 A (SHENZHEN SUNELL TECHNOLOGY CORP.) 11 December 2020 (2020-12-11) description, paragraphs 0032-0113 | 1-4, 8-10 |
| Y | CN 112073703 A (SHENZHEN SUNELL TECHNOLOGY CORP.) 11 December 2020 (2020-12-11) description, paragraphs 0032-0113 | 5-7 |
| Y | CN 111861922 A (ZHEJIANG DAHUA TECHNOLOGY CO., LTD.) 30 October 2020 (2020-10-30) description, paragraphs 0033-0055 | 5-7 |
| A | CN 113947533 A (ZHEJIANG UNIVIEW TECHNOLOGIES CO., LTD.) 18 January 2022 (2022-01-18) entire document | 1-10 |
| A | US 2021407365 A1 (MAGIC LEAP, INC.) 30 December 2021 (2021-12-30) entire document | 1-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 March 2023** | **10 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/142609**

| Patent document cited in search report | | | Publication date (day/month/year) | Patent family member(s) | | | Publication date (day/month/year) |
|---|---|---|---|---|---|---|---|
| CN | 112073703 | A | 11 December 2020 | None | | | |
| CN | 111861922 | A | 30 October 2020 | None | | | |
| CN | 113947533 | A | 18 January 2022 | None | | | |
| US | 2021407365 | A1 | 30 December 2021 | WO | 2021263196 | A1 | 30 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210932339X